# EUROPÄISCHE PATENTANMELDUNG

(11) **EP 2 187 448 A2**
(43) Veröffentlichungstag der Anmeldung: **19.05.2010**
(21) Anmeldenummer: 09173345.1
(22) Anmeldetag: 16.10.2009
(51) Int. Cl.: H01L 31/042

(54) **System zur Befestigung, Solaranlage und Verfahren zur Bestückung einer Solaranlage**

(30) Priorität: 21.10.2008 DE 102008052418
(71) Anmelder: Sunfilm AG, 01900 Grossröhrsdorf (DE)
(72) Erfinder: Schuster, Annemarie, 01454, Radeberg (DE)
(74) Vertreter: Epping - Hermann - Fischer

(57) **Zusammenfassung**

Ein System zur Befestigung eines Photovoltaikmoduls beziehungsweise eine Solaranlage umfasst mindestens ein Photovoltaikmodul, das mit einer Hauptseite mit mindestens einem Trägerelement (101) gekoppelt ist, wobei die Hauptseite von der Haupteinstrahlungsfläche des mindestens einen Photovoltaikmoduls abgewandt ist. Mindestens eine Unterkonstruktion (102) ist zur Aufnahme des Trägerelements (101) ausgebildet. Das System umfasst mindestens ein Koppelelement (103), das mit dem Trägerelement (101) gekoppelt ist und das das Trägerelement (101) mit der Unterkonstruktion (102) koppelt.

## Beschreibung

Die Erfindung betrifft ein System zur Befestigung mindestens eines flächig ausgebildeten Elements zur Energieumwandlung, eine Solaranlage sowie ein Verfahren zur Bestückung einer Solaranlage.

Eine Form der Nutzung der im Sonnenlicht enthaltenen Energie sind Photovoltaikmodule, die auch Solarmodule bezeichnet werden. Photovoltaikmodule umfassen üblicherweise eine Mehrzahl von untereinander elektrisch gekoppelten Solarzellen, die über den photovoltaischen Effekt eine im Licht enthaltene Strahlungsenergie in elektrische Energie umwandeln.

Eine weitere Form der Nutzung der im Sonnenlicht enthaltenen Energie sind Solarkollektoren, die auch Sonnenkollektoren genannt werden. Diese wandeln die im Sonnenlicht enthaltene Energie in thermische Energie um. Solarkollektoren heizen dazu beispielsweise ein Übertragungsmedium auf, wobei nahezu das gesamte Strahlungsspektrum des Sonnenlichtes ausgenutzt wird.

Eine Mehrzahl von Photovoltaikmodulen wird als Solaranlage bezeichnet. Üblicherweise werden die Photovoltaikmodule dabei auf einer Aufständerung befestigt. Insbesondere bei einer großen Anzahl an Solarmodulen, beispielsweise bei so genannten Freiflächensolaranlagen, ist eine solche Art der Installation teuer und aufwändig.

Es ist eine Aufgabe der Erfindung, ein System zur Befestigung anzugeben, bei dem eine relativ einfache und schnelle Installation von flächig ausgedehnten Elementen möglich ist. Zudem ist es eine Aufgabe der Erfindung, eine Solaranlage sowie ein Verfahren zur Bestückung einer Solaranlage anzugeben, um eine relativ einfache und schnelle und damit kostengünstige Installation zu ermöglichen.

Diese Aufgabe wird gelöst durch ein System mit den Merkmalen des Anspruchs 1, eine Solaranlage mit den Merkmalen des Anspruchs 10 beziehungsweise einem Verfahren mit den Merkmalen des Anspruchs 15.

Ein System zur Befestigung mindestens eines flächig ausgebildeten Elements zur Energieumwandlung umfasst mindestens ein Trägerelement, das mit einer Hauptseite des mindestens einen flächig ausgebildeten Elements koppelbar ist. Das System weist eine Unterkonstruktion zur Aufnahme des mindestens einen Trägerelements auf. Mindestens ein Koppelelement ist mit der Unterkonstruktion und dem Trägerelement koppelbar, um das Trägerelement mit der Unterkonstruktion zu koppeln.

Durch die Montage des Trägerelements, das an der Hauptseite des Elements zur Energieumwandlung angeordnet ist, über ein Koppelelement mit einer Unterkonstruktion ist eine schnelle und einfache Installation der Elemente auf der Unterkonstruktion ermöglicht. Die Elemente können in wenigen Arbeitsschritten auf einfache Weise auf einer Aufständerung montiert werden.

In einer Ausführungsform umfasst das mindestens eine flächig ausgebildete Element eine Mehrzahl von photovoltaischen Zellen zur Umwandlung von Strahlungsenergie in elektrische Energie. Die Hauptseite ist von der Haupteinstrahlungsfläche der Mehrzahl von photovoltaischen Zellen abgewandt.

Das Koppelelement kann in einer Ausführungsform einstückig ausgebildet sein. Das Koppelelement kann mindestens ein erstes und ein zweites Paar Haken aufweisen. Das erste Paar Haken kann mit dem Trägerelement koppelbar sein und das zweite Paar mit der Unterkonstruktion. Die Haken können jeweils einen vorspringenden Bereich aufweisen. Die vorspringenden Bereiche der Haken des ersten Paares können einander zugewandt sein. Die vorspringenden Bereiche der Haken des zweiten Paares können einander zugewandt sein. Die Verbindungslinie der Haken des ersten Paares kann quer zu einer Verbindungslinie der Haken des zweiten Paares sein. Die Verbindungslinie der Haken des ersten Paares kann in einer weiteren Ausführungsform gleichgerichtet zu einer Verbindungslinie der Haken des zweiten Paares sein. Die Haken mindestens eines Paares aus erstem und zweitem Paar können verformbar sein.

Durch ein solches Koppelelement ist die Kopplung des Trägerelements mit der Unterkonstruktion relativ schnell und einfach und mit vergleichsweise wenig Arbeitsschritten möglich. Es kann auf relativ zeitaufwändige Arbeitsschritte, wie beispielsweise das Festdrehen von Schraubverbindungen, verzichtet werden.

Das Trägerelement weist in einer Ausführungsform mindestens zwei Bereiche auf, die mit der Hauptseite des flächig ausgebildeten Elements verbunden sind. Das Trägerelement kann mindestens einen weiteren Bereich aufweisen, der beabstandet von der Hauptseite ist. Das Trägerelement weist in dieser Ausführungsform mindestens zwei schräge Flanken zwischen den mindestens zwei Bereichen und dem mindestens einen Bereich auf.

Das Trägerelement kann im Querschnitt die Form eines Trapezprofils aufweisen.

Dadurch kann das Trägerelement das flächig ausgebildete Element stützen. Das Trägerelement kann ein Durchbiegen des Elements verhindern beziehungsweise verringern.

Das Trägerelement umfasst in einer weiteren Ausführungsform mindestens zwei vorspringende Bereiche, die jeweils an einer der mindestens zwei schrägen Flanken angeordnet sind und die jeweils von einem der Haken des ersten Paares hintergreifbar sind. In einer weiteren Ausführungsform kann das Trägerelement mindestens zwei Ausnehmungen aufweisen, die jeweils an einer der mindestens zwei schrägen Flanken angeordnet sind und in die jeweils einer der Haken des ersten Paares eingreifen kann.

So kann das Trägerelement relativ einfach und schnell mit dem Koppelelement gekoppelt werden.

Die Unterkonstruktion umfasst in einer Ausführungsform mindestens eine länglich ausgedehnte Profilstange, die an zwei gegenüber liegenden Seiten jeweils eine Nut aufweist, in die jeweils einer der Haken des zweiten Paares eingreifen kann.

So kann die Unterkonstruktion relativ einfach und schnell mit dem Koppelelement gekoppelt werden.

Das mindestens eine flächig ausgebildete Element weist in einer Ausführungsform eine Fläche von mindestens einem Quadratmeter auf. Das mindestens eine flächig ausgebildete Element weist in einer weiteren Ausführungsform eine Fläche von mindestens fünf Quadratmetern auf. Das flächig ausgebildete Element kann ein rahmenloses Dünnschichtphotovoltaikmodul sein.

Eine Solaranlage umfasst mindestens ein Photovoltaikmodul, das mit einer Hauptseite mit mindestens einem Trägerelement gekoppelt ist, wobei die Hauptseite von der Haupteinstrahlungsfläche des mindestens einen Photovoltaikmoduls abgewandt ist. Die Solaranlage umfasst weiterhin mindestens eine Unterkonstruktion zur Aufnahme des Trägerelements. Mindestens ein Koppelelement ist mit dem Trägerelement gekoppelt und koppelt das Trägerelement mit der Unterkonstruktion.

Durch die Montage des Trägerelements, das an der Hauptseite des Photovoltaikmoduls angeordnet ist, über ein Koppelelement mit einer Unterkonstruktion ist eine schnelle und einfache Installation des Photovoltaikmoduls auf der Unterkonstruktion ermöglicht. Das Photovoltaikmodul kann in wenigen Arbeitsschritten auf einfache Weise auf einer Aufständerung montiert werden.

In einer Ausführungsform weist das Koppelelement mindestens ein erstes und ein zweites Paar Haken auf, wobei das erste Paar mit dem Trägerelement gekoppelt ist und das zweite Paar mit der Unterkonstruktion.

Das Trägerelement weist in einer Ausführungsform mindestens zwei Bereiche auf, die mit der Hauptseite verbunden sind. Das Trägerelement kann mindestens einen weiteren Bereich aufweisen, der beabstandet von der Hauptseite ist. Das Trägerelement weist mindestens zwei schräge Flanken auf, die zwischen den mindestens zwei Bereichen und dem mindestens einen weiteren Bereich verlaufen.

Das Trägerelement kann mindestens zwei vorspringende Bereiche aufweisen, die jeweils an einer der mindestens zwei schrägen Flanken angeordnet sind und bei der jeweils einer der Haken des ersten Paares eine der mindestens schrägen Flanken hintergreift. Das Trägerelement kann mindestens zwei Ausnehmungen aufweisen, die jeweils an einer der mindestens zwei schrägen Flanken angeordnet sind. Jeweils einer der Haken des ersten Paares kann in eine der mindestens zwei Ausnehmungen eingreifen.

Die Unterkonstruktion weist in einer Ausführungsform mindestens eine länglich ausgedehnte Profilstange auf, die an zwei gegenüber liegenden Seiten jeweils eine Nut aufweist. Jeweils einer der Haken des zweiten Paares greift in eine Nut ein.

Das mindestens eine Photovoltaikmodul kann eine Fläche von mindestens fünf Quadratmetern aufweisen. Das mindestens eine Photovoltaikmodul kann als rahmenloses Dünnschichtphotovoltaikmodul ausgebildet sein.

Ein Verfahren zur Bestückung einer Solaranlage umfasst ein Bereitstellen einer Unterkonstruktion zur Aufnahme mindestens eines Photovoltaikmoduls. Mindestens ein Koppelelement wird in die Unterkonstruktion eingehakt. Das mindestens eine Koppelelement wird in mindestens ein Trägerelement des mindestens einen Photovoltaikmoduls eingehakt.

In einer Ausführungsform umfasst das Verfahren ein Einhaken mindestens eines vorspringenden Bereichs des Koppelelements in eine Nut der Unterkonstruktion. Mindestens ein weiterer vorspringender Bereich des Koppelelements kann in einen vorspringenden Bereich des mindestens einen Trägerelements eingehakt werden.

In einer weiteren Ausführungsform kann das Verfahren ein Einhaken mindestens eines vorspringenden Bereichs des Koppelelements in eine Nut der Unterkonstruktion umfassen. Mindestens ein weiterer vorspringender Bereich des Koppelelements kann in eine Ausnehmung des mindestens einen Trägerelements eingehakt werden.

Weitere Merkmale, Vorteile und Weiterbildungen ergeben sich aus den nachfolgenden in Verbindung mit den Figuren 1 bis 6 erläuterten Beispielen.

Es zeigen:
- Figur 1: eine schematische Ansicht eines Systems zur Befestigung gemäß einer Ausführungsform,
- Figur 2: eine schematische Darstellung eines Koppelelements gemäß einer Ausführungsform,
- Figuren 3A und 3B: eine schematische Darstellung eines Trägerelements gemäß einer Ausführungsform,
- Figur 4: eine schematische Darstellung eines Trägerelements gemäß einer weiteren Ausführungsform,
- Figur 5: eine schematische Darstellung eines Photovoltaikmoduls mit Trägerelementen gemäß einer Ausführungsform,
- Figur 6: eine schematische Darstellung einer Solaranlage gemäß einer Ausführungsform,
- Figuren 7A und 7B: eine schematische Ansicht eines Systems zur Befestigung gemäß einer Ausführungsform,
- Figur 8: eine schematische Ansicht eines Systems zur Befestigung gemäß einer Ausführungsform.

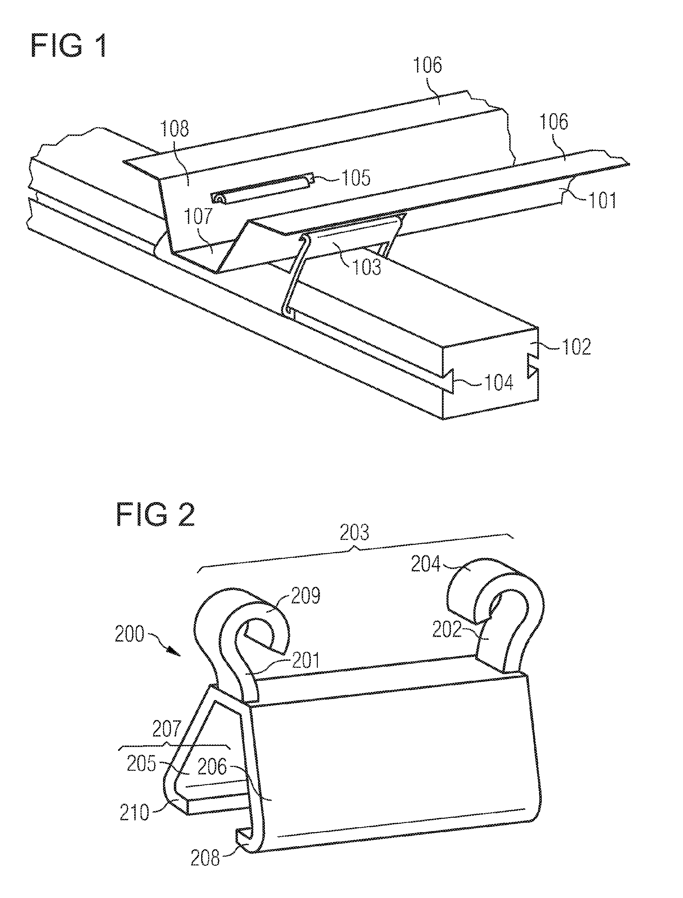

Figur 1 zeigt ein Trägerelement 101, das über ein Koppelelement 103 mit einer Unterkonstruktion 102 gekoppelt ist. Das Trägerelement 101 weist zwei Bereiche 106 auf, die beabstandet zueinander im Wesentlichen in einer Ebene verlaufen. Das Trägerelement 101 weist einen weiteren Bereich 107 auf, der im Wesentlichen parallel zu den Bereichen 106 verläuft. Der weitere Bereich 107 ist von den Bereichen 106 beabstandet. Der weitere Bereich 107 ist zwischen den Bereichen 106 angeordnet. Zwischen dem Bereich 107 und den Bereichen 106 verläuft jeweils eine schräge Flanke 108.

Mit den Bereichen 106 kann das Trägerelement mit einem Element zur Energieumwandlung gekoppelt werden (nicht gezeigt). Beispielweise ist das Element ein Photovoltaikmodul zur Umwandlung von Strahlungsenergie in elektrische Energie oder ein Sonnenkollektor zur Umwandlung von Strahlungsenergie in thermische Energie. Beispielsweise kann das Element zur Energieumwandlung mit dem Trägerelement 101 durch eine Klebeverbindung oder eine Schraub- oder Klemmverbindung gekoppelt sein. Das Trägerelement 101 weist im Querschnitt eine Form eines Trapezprofils auf und umfasst beispielsweise ein Metall. Das Trägerelement 101 ist beispielsweise ein Aluminiumprofil. Das Trägerelement kann in einer Ausführungsform das Photovoltaikmodul unterstützen, so dass vergleichsweise große Photovoltaikmodule stabil ausgebildet werden können.

Zur Kopplung mit der Unterkonstruktion 102 durch das Koppelelement 103 weist das Trägerelement 101 in der gezeigten Ausführungsform Ausnehmungen 105 auf. Es sind zwei Ausnehmungen 105 gezeigt, das Trägerelement kann jedoch auch mehr als zwei Ausnehmungen aufweisen, beispielsweise vier oder mehr Ausnehmungen. Die Ausnehmungen werden von den schrägen Flanken 108 umgeben. Jeweils eine Ausnehmung ist an einer der Flanken 108 angeordnet. Es können auch mehr Ausnehmungen, beispielsweise zwei Ausnehmungen, an je einer Flanke angeordnet sein. Die Ausnehmungen an einer Flanke sind dann beabstandet zueinander angeordnet. Jeweils zwei Ausnehmungen sind an den zwei Flanken 108 entgegengesetzt angeordnet. Die Ausnehmungen sind so dimensioniert, dass das Koppelelement 103 in die Ausnehmungen eingreifen kann, insbesondere können Haken oder andere vorspringende Bereiche des Koppelelements 103 in die Ausnehmungen eingreifen. Durch das Eingreifen des Koppelelements in die Ausnehmungen des Trägerelements 101 ist das Koppelelement 103 mit dem Trägerelement 101 gekoppelt.

Die Unterkonstruktion 102, beispielsweise ein länglich ausgedehntes Aluminiumprofil, weist im gezeigten Ausführungsbeispiel zwei Nuten 104 auf. Die Nuten 104 sind jeweils an einer gegenüber liegenden Seite des Aluminiumprofils angeordnet. Über die Nuten 104 kann das Koppelelement 103 mit der Unterkonstruktion 102 gekoppelt werden. Die Nuten 104 können von weiteren Haken des Koppelelements 103 hintergriffen werden. Zum Koppeln des Koppelelements 103 mit der Unterkonstruktion 102 greift das Koppelelement 103 in die Nuten 104 ein.

Das Koppelelement 103 kann in Längsrichtung der Nuten auf die Unterkonstruktion 102 geschoben werden und positioniert werden. Das Koppelelement 103 kann auch quer zur Längsrichtung der Nuten 104 auf die Unterkonstruktion 102 gesteckt werden.

Das Koppelelement kann dazu verformbar sein. Die Haken des Koppelelements werden beim Aufstecken auf die Unterkonstruktion aus ihrer gezeigten Ruhestellung bewegt und gleiten über die Unterkonstruktion bis sie in die Nuten 104 einschnappen. Die Haken greifen so in die Nut ein und das Koppelelement ist mit der Unterkonstruktion gekoppelt.

Vergleichbar dazu kann das Trägerelement 101 mit dem Koppelelement 103 gekoppelt werden. Das Trägerelement wird auf das Koppelelement geschoben und lenkt die Haken des Koppelelements aus ihrer Ruheposition aus. Das Trägerelement wird weiter bewegt, bis die Haken des Koppelelements in die Ausnehmungen 105 des Trägerelements einhaken. So kann das Trägerelement 101 durch das Koppelelement 103 mit der Unterkonstruktion 102 relativ einfach und schnell gekoppelt werden. Die Haken können zumindest bereichsweise elastisch verformbar sein. Die Verformung der Haken kann auch teilweise plastisch erfolgen. Die Haken sind so verformbar, dass sie beim Aufstecken auf die Unterkonstruktion beziehungsweise auf das Trägerelement aus ihrer gezeigten Ruhestellung bewegt werden können und anschließend das Koppelement mit der Unterkonstruktion beziehungsweise mit dem Trägerelement koppeln können. Insbesondere müssen im gezeigten Ausführungsbeispiel keine Schraubverbindungen oder ähnliches geschlossen werden, was eine relativ einfache und schnelle Montage ermöglicht.

Figur 2 zeigt ein Koppelelement 200, das ein erstes Hakenpaar 203 mit Haken 201 und 202 aufweist. Das Koppelelement 200 weist ein weiteres Hakenpaar 207 mit weiteren Haken 205 und 206 auf. Der Haken 201 weist einen vorspringenden Bereich 209 auf. Der Haken 202 weist einen vorspringenden Bereich 204 auf. Die vorspringenden Bereiche 204 und 209 sind an den nach außen gerichteten Enden der Haken 201 und 202 angeordnet und einander zugewandt. Die Haken 201 und 202 sind eingerichtet, mit einem Trägerelement eines Photovoltaikmoduls gekoppelt zu werden. Die Haken 205 und 206 sind eingerichtet, mit einer Unterkonstruktion zur Aufnahme von Photovoltaikmodulen gekoppelt zu werden.

Der Haken 205 weist einen vorspringenden Bereich 210 und der Haken 206 einen vorspringenden Bereich 208 auf. Die vorspringenden Bereiche 208 und 210 sind jeweils an den nach außen gerichteten Enden der Haken 205 und 206 angeordnet und einander zugewandt. Eine Verbindungslinie der Haken 201 und 202 ist quer zu einer Verbindungslinie der Haken 205 und 206. Die beiden genannten Verbindungslinien weisen zueinander einen Winkel von etwa 90° auf. In einem weiteren Ausführungsbeispiel sind die Verbindungslinien der Haken 201 und 202 und der Haken 205 und 206 im Wesentlichen parallel zu einander. Die Verbindungslinien können auch einen anderen Winkel einschließen, insbesondere einen Winkel zwischen 0° und 90°.

Das Koppelelement umfasst ein Material, das über einen Zeitraum von mehreren Jahren, insbesondere über 20 Jahre oder mehr, stabil und beständig gegenüber Umwelteinflüssen ist. Das Koppelelement umfasst in einer Ausführungsform Stahl, es kann auch Aluminium oder Kunststoff umfassen. Die Haken des Hakenpaars 203 können verformbar sein, so dass die Haken 201 und 202 aus ihrer gezeigten Ruheposition voneinander weg bewegt werden können und wieder in die Ruheposition bewegt werden können. Die Haken des Hakenpaars 207 können verformbar sein, so dass die Haken 205 und 206 aus ihrer gezeigten Ruheposition voneinander weg bewegt werden können und wieder in ihre Ruheposition bewegt werden können. Die Verformung der Haken 201, 202, 205 beziehungsweise 206 kann zumindest bereichsweise elastisch sein. Die Haken können auch teilweise plastisch verformt werden.

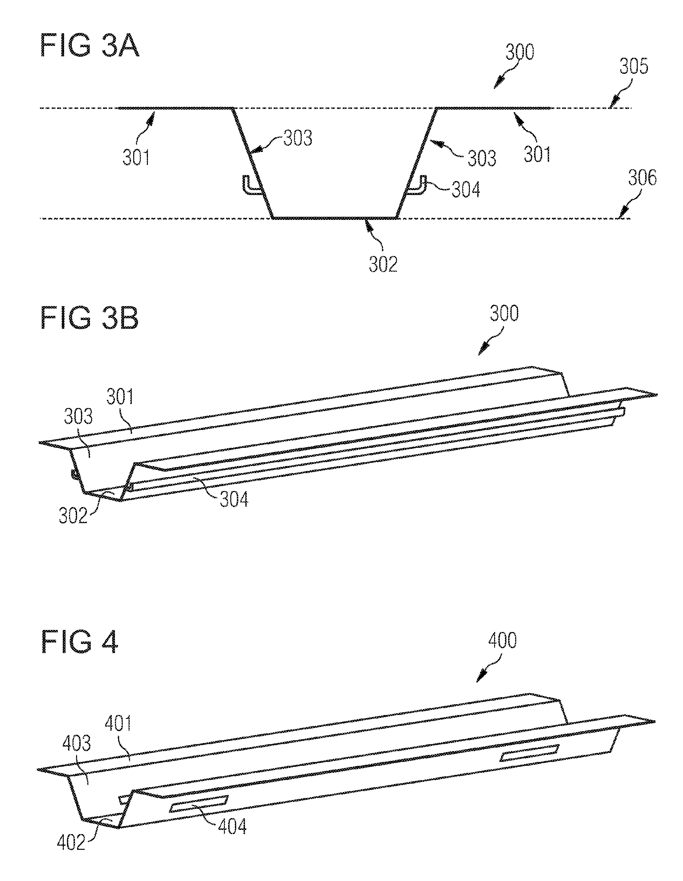

Figur 3A zeigt ein Trägerelement 300 im Querschnitt. Das Trägerelement 300 weist zwei Bereiche 301 auf, die beabstandet zueinander im Wesentlichen in einer Ebene 305 verlaufen. Ein weiterer Bereich 302 verläuft im Wesentlichen parallel zu den Bereichen 301 beabstandet zu den Bereichen 301 in einer weiteren Ebene 306. Der weitere Bereich 302 ist zwischen den Bereichen 301 angeordnet. Zwischen den Bereichen 301 und dem weiteren Bereich 302 verläuft jeweils eine Flanke 303. An den Flanken 303 ist jeweils ein vorspringender Bereich 304 angeordnet. Die vorspringenden Bereiche 304 sind eingerichtet, mit den Haken eines Koppelelements gekoppelt zu werden beziehungsweise von den Haken hintergriffen zu werden.

Zusätzlich zu den vorspringenden Bereichen können in einer Ausführungsform im Bereich der vorspringenden Bereiche 304 Ausnehmungen angeordnet sein, vergleichbar wie in Verbindung mit Figur 4 beschrieben. Das Trägerelement 300, das im Querschnitt die Form eines Trapezprofils aufweist umfasst ein Metall oder eine anderes Material, das über einen Zeitraum von mehreren Jahren, insbesondere über 20 Jahre oder mehr, stabil und beständig gegenüber Umwelteinflüssen ist. Das Trägerelement ist aus einem Material gefertigt, das eingerichtet ist ein Photovoltaikmodul zu tragen und dieses zu unterstützen. Das Trägerelement ist beispielsweise ein Aluminiumstangenpressprofil.

Figur 3B zeigt eine schematische Seitenansicht des Trägerelements 300. Die Bereiche 301 verlaufen länglich ausgedehnt und beabstandet zueinander in einer Ebene. Beabstandet dazu verläuft der weitere Bereich 302 länglich ausgedehnt und zwischen den Bereichen 301 und 302 jeweils die länglich ausgedehnte Flanke 303. An den nach außen gerichteten Seiten der Flanken 303 ist der vorspringende Bereich 304 über die gesamte Länge des Trägerelements 303 ausgedehnt. In einer weiteren Ausführungsform kann der vorspringende Bereich auch nur über Teile der Flanken 303 ausgedehnt sein, insbesondere in den Bereichen, in denen das Trägerelement mit einem Koppelelement gekoppelt werden soll.

Figur 4 zeigt eine weitere Ausführungsform eines Trägerelements 400, das zwei Bereiche 401 aufweist, beabstandet dazu einen weiteren Bereich 402 und zwischen den Bereichen 401 und 402 jeweils eine schräge Flanke 403. An der schrägen Flanke 403 angeordnet weist das Trägerelement 400 vier Ausnehmungen 404 auf. Die Ausnehmungen werden von dem Trägerelement so umgeben, dass sie mit einem Koppelelement gekoppelt werden können. Haken des Koppelelements können auf das Trägerelement aufgesteckt werden und in die Ausnehmungen 404 eingreifen. Die Ausnehmungen 404 sind jeweils an den Flanken 403 gegenüber paarweise angeordnet. Das Trägerelement kann auch weniger als vier Ausnehmungen aufweisen, beispielsweise zwei Ausnehmungen, das Trägerelement kann auch mehr als vier Ausnehmungen aufweisen, beispielsweise sechs Ausnehmungen.

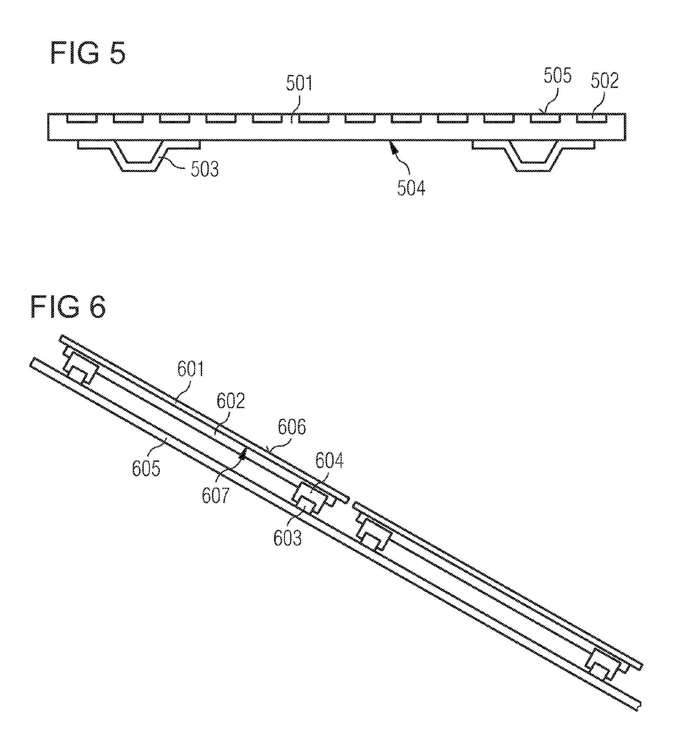

Figur 5 zeigt eine schematische Darstellung eines Photovoltaikmoduls 501. Das Photovoltaikmodul 501 weist eine Mehrzahl von photovoltaischen Zellen 502 auf. Das Photovoltaikmodul 501 ist in diesem Ausführungsbeispiel als Dünnfilm- beziehungsweise Dünnschichtsolarmodul ausgeführt. Dünnschichtsolarmodule weisen dazu photoaktive Schichten einer Dicke im Bereich von wenigen zehn Nanometern bis einigen Mikrometern auf. Üblicherweise werden die photoaktiven Schichten zusammen mit Kontakt- und gegebenenfalls Reflektionsschichten großflächig auf ein Substrat, beispielsweise eine Glasscheibe, aufgebracht. Mit Hilfe von einem oder mehreren Strukturierungsschritten wird eine Mehrzahl von einzelnen streifenförmigen Solarzellen gebildet, die elektrisch in Serie verschaltet sind. Die Breite der streifenförmigen Solarzellen, auch Zellstreifen genannt, liegt im Bereich von Zentimetern. Auf die äußeren Zellstreifen werden üblicherweise Stromabnehmer aufgebracht, über die das Dünnschichtsolarmodul angeschlossen wird und die erzeugte elektrische Leistung abgeführt werden kann.

Auf das beschichtete Substrat wird zumeist ein weiteres flächiges Material, zum Beispiel eine weitere Glasscheibe, auflaminiert, um die photoaktiven Schichten vor Beschädigungen und Umwelteinflüssen zu schützen. Zur Verstärkung des Solarmoduls kann ein umlaufender Rahmen beispielsweise aus Aluminium eingesetzt werden. Bei Photovoltaikmodulen ohne einen solchen Rahmen, so genannte rahmenlose Dünnschichtsolarmodule, kann zur Stabilisierung und zur Unterstützung der Tragfähigkeit des Photovoltaikmoduls ein Trägerelement oder mehrere Trägerelemente 503 angeordnet werden. Die Trägerelemente können auch an weiteren Bauformen von Photovoltaikmodulen oder Sonnenkollektoren angeordnet werden, beispielsweise an der Rückseite von (poly-) kristallinen Photovoltaikmodulen.

Im gezeigten Ausführungsbeispiel sind auf einer Hauptseite 504 des Photovoltaikmoduls 501 zwei Trägerelemente 503 angeordnet. Die Hauptseite 504 ist einer Haupteinstrahlfläche 505 abgewandt. Die Haupteinstrahlfläche 505 ist die Fläche, auf die in betriebsfertigem Zustand Strahlung auftreffen kann und daraufhin in elektrische Energie umgewandelt werden kann. Auf die Haupteinstrahlfläche 505 trifft in betriebsfertigem Zustand beispielsweise möglichst viel Sonnenstrahlung auf.

Das Photovoltaikmodul kann eine Größe von mehr als 5 Quadratmetern aufweisen, beispielsweise etwa 5,7 Quadratmeter. Das Photovoltaikmodul kann auch größer sein, beispielsweise eine Fläche von mindestens 10 Quadratmetern aufweisen, es kann auch kleiner sein und beispielsweise eine Fläche von etwa 1,4 Quadratmetern aufweisen. Insbesondere bei großflächigen Photovoltaikmodulen mit einer Größe über 5 Quadratmetern können die Trägerelemente 503 die Photovoltaikmodule besonders gut unterstützen und stabilisieren. Die Trägerelemente sind dazu auf der Rückseite des Photovoltaikmoduls angebracht.

Um die Trägerelemente 503 auch zur Kopplung des Photovoltaikmoduls mit einer Unterkonstruktion verwenden zu können, weisen die Trägerelemente 503 Befestigungselemente wie beispielsweise vorspringende Bereiche oder Ausnehmungen auf. Die Trägerelemente weisen im Querschnitt die Form eines Trapezprofils auf und sind mit dem Photovoltaikmodul gekoppelt, beispielsweise über eine Klebe-, Steck- oder Schraubverbindung. Im gezeigten Ausführungsbeispiel weist das Photovoltaikmodul zwei Trägerelemente 503 auf, es kann auch lediglich ein Trägerelement 503 aufweisen oder mehr als zwei Trägerelemente, beispielsweise drei Trägerelemente.

Figur 6 zeigt eine schematische Darstellung einer Solaranlage. Die Solaranlage weist Photovoltaikmodule 601 auf, von denen zwei in Seitenansicht gezeigt sind. Die Photovoltaikmodule 601 weisen jeweils Trägerelemente 602 auf. Die Trägerelemente sind jeweils mit einer Hauptseite 607 der Photovoltaikmodule gekoppelt. Die Hauptseite 607 ist von der Haupteinstrahlfläche 606 abgewandt, auf die in Betrieb im Wesentlichen die umzuwandelnde Strahlungsenergie auftritt. Die Trägerelemente 602 weisen beispielsweise die Form eines Trapezprofils auf und weisen Befestigungselemente wie beispielsweise vorspringende Bereiche oder Ausnehmungen auf. Mit diesen Befestigungselementen sind die Photovoltaikmodule 601 jeweils mit Koppelelementen 604 gekoppelt. Ein Photovoltaikmodul kann beispielsweise zwei Trägerelemente 602 aufweisen und mit vier Koppelelementen 604 gekoppelt sein. Die Koppelelemente 604 sind insbesondere über einen Einhakmechanismus mit den Trägerelementen gekoppelt und koppeln diese auf eine Unterkonstruktion 603, ohne dass eine Schraubverbindung mit den Koppelelementen notwendig ist. Die Unterkonstruktion 603 ist auf einer Aufständerung 605 montiert. Die Aufständerung 605 kann beispielsweise Teil eines Dachs sein, insbesondere die Sparren eines geneigten Dachs. Die Aufständerung 605 kann auch Teil einer Flachdachaufständerung sein oder Teil einer Aufständerung einer Freiflächenanlage sein. Dazu kann die Aufständerung über Verankerungen mit dem Erdreich verbunden sein.

Zur Bestückung der Solaranlage werden auf der bereitgestellten Unterkonstruktion 603 die Koppelelemente 604 montiert. Dazu weist die Unterkonstruktion Befestigungselemente, beispielsweise Nuten auf. Die Koppelelemente werden in die Nuten eingehakt, insbesondere können vorspringende Bereiche des Koppelelements in die Nuten der Unterkonstruktion eingehakt werden. Zur Positionierung der Koppelelemente 604 kann beispielsweise eine Lehre verwendet werden. Pro zu montierendem Photovoltaikmodul werden beispielsweise vier Koppelelemente 604 auf die Unterkonstruktion 603 montiert und entsprechend der Trägerelemente 602 des zu montierenden Photovoltaikmoduls 601 ausgerichtet. Das Photovoltaikmodul 603 beziehungsweise die Trägerelemente 602 des Photovoltaikmoduls werden mit den Koppelelementen 604 gekoppelt. Insbesondere werden vorspringende Bereiche des Koppelelements 604 in Befestigungselemente der Trägerelemente, beispielsweise vorspringende Bereiche oder Ausnehmungen eingehakt. Das Photovoltaikmodul kann mit den Trägerelementen quer zur Ausrichtung der Unterkonstruktion auf die Koppelelemente aufgedrückt werden und in diese einhaken. Somit ist eine einfache und schnelle Montage insbesondere ohne Schraubverbindungen ermöglicht.

Zur Demontage können die Haken der Koppelelemente 604 auseinander bewegt werden und von den Trägerelementen 602 entkoppelt werden. Daraufhin können die Trägerelemente 602 beziehungsweise die Photovoltaikmodule 601 entfernt werden. Die Haken, die in die Unterkonstruktion 603 eingreifen, können ebenfalls auseinandergedrückt werden und so die Koppelelemente 604 von der Unterkonstruktion 603 entfernt werden.

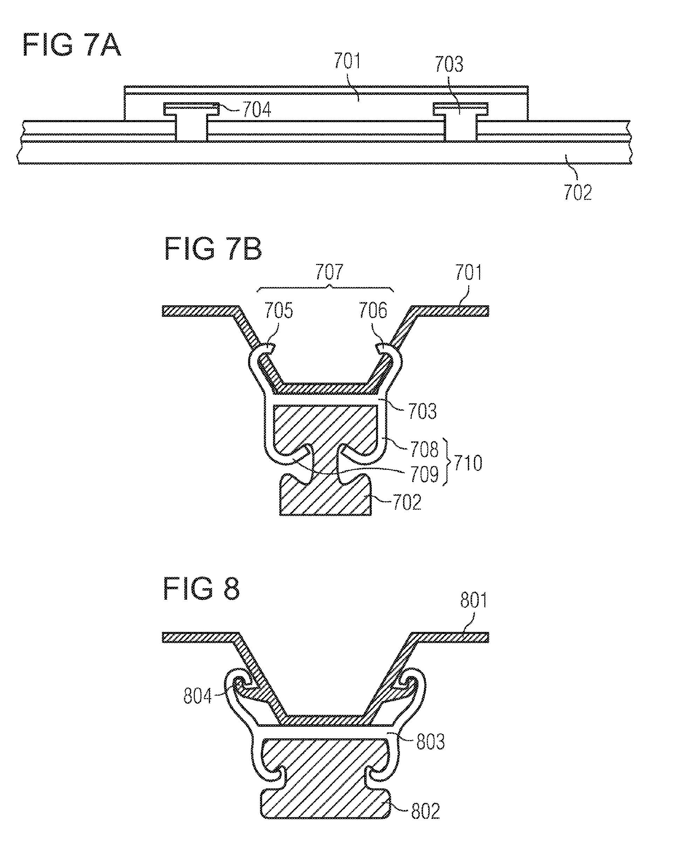

Figuren 7A und 7B zeigen ein Trägerelement 701, das mit einem Fotovoltaikmodul gekoppelt werden kann. Das Trägerelement 701 ist über ein Koppelelement 703 mit einer Unterkonstruktion 702 gekoppelt. In der gezeigten Ausführungsform verlaufen die Längsrichtungen des Trägerelements 701 und der Profilstangen der Unterkonstruktion 702 im Wesentlichen in die gleiche Richtung parallel zueinander. Die Verbindungslinien der Haken der jeweiligen Hakenpaare des Koppelelements 703 sind im gezeigten Ausführungsbeispiel im Wesentlichen parallel zueinander und schließen einen Winkel von etwa 0° ein.

Figur 7B zeigt die Anordnung aus Figur 7A im Querschnitt. Das Koppelelement 703 weist ein Hakenpaar 707 auf, das einen Haken 705 und einen Haken 706 aufweist. Die Haken 705 und 706 greifen jeweils in eine Ausnehmung 704 des Trägerelements 701 ein. Entgegengesetzt zu dem Hakenpaar 707 weist das Koppelelement 703 ein Hakenpaar 710 auf, das einen Haken 708 und einen Haken 709 aufweist. Die Haken 708 und 709 greifen jeweils in Nuten der Unterkonstruktion 702 ein, sodass das Trägerelement 701 mit der Unterkonstruktion 702 gekoppelt ist. Die Ausrichtung der Hakenpaare 707 und 710 ist im Wesentlichen parallel zueinander.

Die Haken des Hakenpaars 707 können verformbar sein, so dass die Haken 705 und 706 aus ihrer gezeigten Position voneinander weg bewegt werden können und wieder in die Position zur Kopplung bewegt werden können. Die Haken des Hakenpaars 710 können verformbar sein, so dass die Haken 708 und 709 aus ihrer gezeigten Position voneinander weg bewegt werden können und wieder in die Position zur Kopplung bewegt werden können. Die Verformung der Haken kann zumindest bereichsweise elastisch sein. Die Haken können auch teilweise plastisch verformt werden.

Figur 8 zeigt ein Trägerelement 801, das über ein Koppelelement 803 mit einer Unterkonstruktion 802 gekoppelt ist. Haken des Koppelelements 803 greifen in vorspringende Bereiche 804 des Trägerelements 801 ein. Weitere Haken des Koppelelements 803 greifen in Nuten der Unterkonstruktion 802 ein. Die längliche Ausdehnung des Trägerelements ist im Wesentlichen parallel zu der länglichen Ausdehnung der Profilstangen der Unterkonstruktion 802. Die vorspringenden Bereiche 804 des Trägerelements 801 verlaufen im Wesentlichen parallel zu den Profilstangen der Unterkonstruktion 802 beziehungsweise zu den Nuten der Profilstangen. Die Ausrichtung der Haken des Koppelelements 803 zur Kopplung mit dem Trägerelement 801 und die Ausrichtung der Haken zur Kopplung mit der Unterkonstruktion sind im Wesentlichen gleichgerichtet zueinander.

Die vorspringenden Bereiche 804 können über die gesamte Länge des Trägerelements 801 ausgedehnt sein, sie können sich auch nur über Teile erstrecken, insbesondere in den Bereichen, in denen das Trägerelement mit dem Koppelelement 803 gekoppelt werden soll. Zusätzlich zu den vorspringenden Bereichen können in einer Ausführungsform im Bereich der vorspringenden Bereiche 804 Ausnehmungen angeordnet sein, vergleichbar wie beispielsweise in Verbindung mit den Figuren 7A und 7B beschrieben.

Bezugszeichenliste
- 101: Trägerelement
- 102: Unterkonstruktion
- 103: Koppelelement
- 104: Nut
- 105: Ausnehmung
- 106: Bereich I
- 107: Bereich II
- 108: Flanke
- 200: Koppelelement
- 201: Haken
- 202: Haken
- 203: Hakenpaar
- 204: vorspringender Bereich
- 205: Haken
- 206: Haken
- 207: Hakenpaar
- 208: vorspringender Bereich
- 209: vorspringender Bereich
- 210: vorspringender Bereich
- 300: Trägerelement
- 301: Bereich I
- 302: Bereich II
- 303: Flanke
- 304: vorspringender Bereich
- 305: Ebene I
- 306: Ebene II
- 400: Trägerelement
- 401: Bereich I
- 402: Bereich II
- 403: Flanke
- 404: Ausnehmung
- 501: Photovoltaikmodul
- 502: photovoltaische Zelle
- 503: Trägerelement
- 504: Hauptseite
- 505: Haupteinstrahlfläche
- 601: Photovoltaikmodul
- 602: Trägerelement
- 603: Unterkonstruktion
- 604: Koppelelement
- 605: Aufständerung
- 606: Haupteinstrahlfläche
- 607: Hauptseite
- 701: Trägerelement
- 702: Unterkonstruktion
- 703: Koppelelement
- 704: Ausnehmung
- 705: Haken
- 706: Haken
- 707: Hakenpaar
- 708: Haken
- 709: Haken
- 710: Hakenpaar
- 801: Trägerelement
- 802: Unterkonstruktion
- 803: Koppelelement
- 804: vorspringender Bereich

## Patentansprüche

1. System zur Befestigung mindestens eines flächig ausgebildeten Elements zur Energieumwandlung, umfassend:
- mindestens ein Trägerelement (101; 503), das mit einer Hauptseite (504) des mindestens einen flächig ausgebildeten Elements (501) koppelbar ist,
- eine Unterkonstruktion (102) zur Aufnahme des mindestens einen Trägerelements(101),
- mindestens ein Koppelelement (103), das mit der Unterkonstruktion (102) und dem Trägerelement (101) koppelbar ist, um das Trägerelement (101) mit der Unterkonstruktion (102) zu koppeln.

2. System nach Anspruch 1, bei dem das mindestens eine flächig ausgebildete Element (501) eine Mehrzahl von photovoltaischen Zellen (502) zur Umwandlung von Strahlungsenergie in elektrische Energie aufweist und bei dem die Hauptseite (504) von der Haupteinstrahlungsfläche (505) der Mehrzahl von photovoltaischen Zellen (502) abgewandt ist.

3. System nach Anspruch 1 oder 2, bei dem das Koppelelement (103) einstückig ausgebildet ist.

4. System nach einem der Ansprüche 1 bis 3, bei dem das Koppelelement (103; 200) mindestens ein erstes (203) und ein zweites (207) Paar Haken (201, 202, 205, 206) aufweist, wobei das erste Paar (203) mit dem Trägerelement (101) koppelbar ist und das zweite Paar (207) mit der Unterkonstruktion (102) koppelbar ist.

5. System nach Anspruch 4, bei dem eine Verbindungslinie der Haken (201, 202) des ersten Paares (203) quer zu einer Verbindungslinie der Haken (205, 206) des zweiten Paares (207) ist.

6. System nach Anspruch 4 , bei dem eine Verbindungslinie der Haken (201, 202) des ersten Paares (203) gleichgerichtet zu einer Verbindungslinie der Haken (205, 206) des zweiten Paares (207) ist.

7. System nach einem der Ansprüche 4 bis 6, bei dem das Trägerelement (101) aufweist:
- mindestens zwei Bereiche (106), die mit der Hauptseite des flächig ausgebildeten Elements verbunden sind,
- mindestens einen weiteren Bereich (107), der beabstandet von der Hauptseite ist,
- mindestens zwei schräge Flanken (108) zwischen den mindestens zwei Bereichen (106) und dem mindestens einen Bereich (107).

8. System nach Anspruch 7, bei dem das Trägerelement (101; 300) mindestens zwei vorspringende Bereiche (304) aufweist, die jeweils an einer der mindestens zwei schrägen Flanken (303) angeordnet sind und die jeweils von einem der Haken (201, 202) des ersten Paares (203) hintergreifbar sind.

9. System nach Anspruch 7 oder 8, bei dem das Trägerelement (101; 400) mindestens zwei Ausnehmungen (404) aufweist, die jeweils an einer der mindestens zwei schrägen Flanken (403) angeordnet sind und in die jeweils einer der Haken (201, 202) des ersten Paares (203) eingreifen kann.

10. Solaranlage, umfassend:
- mindestens ein Photovoltaikmodul (601), das mit einer Hauptseite (607) mit mindestens einem Trägerelement (602) gekoppelt ist, wobei die Hauptseite (607) von der Haupteinstrahlungsfläche (606) des mindestens einen Photovoltaikmoduls (601) abgewandt ist,
- mindestens eine Unterkonstruktion (603) zur Aufnahme des Trägerelements (602),
- mindestens ein Koppelelement (604), das mit dem Trägerelement (602) gekoppelt ist und das das Trägerelement (602) mit der Unterkonstruktion (603) koppelt.

11. Solaranlage nach Anspruch 10, bei der das Koppelelement (604; 200) mindestens ein erstes (203) und ein zweites (207) Paar Haken (201, 202, 205, 206) aufweist, wobei das erste Paar (203) mit dem Trägerelement (101) gekoppelt ist und das zweite Paar (207) mit der Unterkonstruktion (102) gekoppelt ist.

12. Solaranlage nach Anspruch 11, bei der das Trägerelement mindestens zwei vorspringende Bereiche (304) aufweist, die jeweils an einer von mindestens zwei schrägen Flanken (303) angeordnet sind und bei der jeweils einer der Haken (201, 202) des ersten Paares (203) eine der mindestens zwei schrägen Flanken (303) hintergreift.

13. Solaranlage nach Anspruch 12, bei der das Trägerelement (101; 400) mindestens zwei Ausnehmungen (404) aufweist, die jeweils an einer der mindestens zwei schrägen Flanken (403) angeordnet sind und bei der jeweils einer der Haken (201, 202) des ersten Paares (203) in eine der mindestens zwei Ausnehmungen (404) eingreift.

14. Solaranlage nach einem der Ansprüche 10 bis 13, bei der die Unterkonstruktion (102) mindestens eine länglich ausgedehnte Profilstange aufweist, die an zwei gegenüberliegenden Seiten jeweils eine Nut (104) aufweist, in die jeweils einer der Haken (205, 206) des zweiten Paares (207) eingreift.

15. Verfahren zur Bestückung einer Solaranlage, umfassend:
- Bereitstellen einer Unterkonstruktion (102) zur Aufnahme mindestens eines Photovoltaikmoduls,
- Einhaken mindestens eines Koppelelements (104) in die Unterkonstruktion (102),
- Einhaken des mindestens eines Koppelelements (104) in mindestens ein Trägerelements (101) des mindestens einen Photovoltaikmoduls.
